# EUROPÄISCHE PATENTSCHRIFT

(11) **EP 1 829 816 B1**
(45) Veröffentlichungstag und Bekanntmachung des Hinweises auf die Patenterteilung: **19.10.2011**
(21) Anmeldenummer: 07002797.4
(22) Anmeldetag: 09.02.2007
(51) Int. Cl.: B66F 9/24, B65G 1/137, G06K 7/08, B66F 9/075

(54) **Flurförderzeug mit einem Bordcomputer**
Industrial truck with a on-board computer
Chariot de manutention muni d'un ordinateur de bord

(30) Priorität: 03.03.2006 DE 102006010292
(43) Veröffentlichungstag der Anmeldung: 05.09.2007
(73) Patentinhaber: Jungheinrich Aktiengesellschaft, 22047 Hamburg (DE)
(72) Erfinder: Baginski, Ralf, Dipl.-Ing., 21398 Neetze (DE); Mänken, Frank, Dr.-Ing., 24558 Henstedt-Ulzburg (DE); von Werder, Martin, Dipl.-Ing., 22949 Ammersbek (DE)
(74) Vertreter: Hauck Patent- und Rechtsanwälte

(56) Entgegenhaltungen:
- US-A- 5 006 996
- US-A- 5 113 349
- US-A1- 2002 070 862
- US-A1- 2005 200 457
- KREIENMEIER CHRISTOF: "Lagerlogistik mobilisiert" DHP DEUTSCHE HEBE- UND FOERDERTECHNIK, AGT VERLAG THUM GMBH., LUDWIGSHAFEN, DE, Nr. 5, 1. Januar 2005 (2005-01-01), Seiten 58-60, XP009106030 ISSN: 0723-7901

## Beschreibung

Die vorliegende Erfindung betrifft ein Flurförderzeug, das eine für eine Bedienperson zugängliche Anzeigeeinheit und ein Eingabegerät aufweist.

Flurförderzeuge mit Bordcomputern sind an sich bekannt, insbesondere ist es auch bekannt, dass eine Bedienperson des Flurförderzeugs über das Eingabegerät Daten in den Bordcomputer eingibt oder deren Anzeige auslöst. So können über den Bordcomputer beispielsweise Daten des Flurförderzeugs abgefragt werden.

Ferner ist beispielsweise aus US 2002/0070862 A2 bekannt, ein Lager über ein zentrales Lagerverwaltungssystemzu verwalten. Das Lagerverwaltungssystem erfasst in sogenannten Belegungsdaten Art und Position der Waren im Lager. Das Lagerverwaltungssystem bildet das gesamte Lager mit seinen Waren ab, so dass das Lagerverwaltungssystem jederzeit über den aktuellen Zustand des Lagers Auskunft geben kann. Um mit einem zentralen Lagerverwaltungssystem effektiv arbeiten zu können, ist es notwendig, den Transport der Waren im Lager sowie die eingehenden und abgehenden Waren zu erfassen. Gemäß US 2002/0070862 A2 erfolgt die Datenerfassung für das zentrale Lagerverwaltungssystem durch ein RFYD-Lesegerät, das die von den Waren empfangenen Daten an einen. Prozessor weiterleitet, von wo aus sie dann an das zentrale Lagerverwaltungssystem weitergesendet werden.

Der mit einem Lagerverwaltungssystem verbundene Aufwand wird insbesondere für kleinere Lager vermieden. Beim Einsatz von einigen wenigen Flurförderzeugen werden die Waren unkoordiniert und lediglich auf "Zuruf" durch den Lagerleiter bewegt. Aufgabe des Fahrzeugbedieners ist es dann, erhaltene Transportaufträge möglichst effektiv durchzuführen. In der

Regel hängt die Effizienz bei der Bewirtschaftung eines solchen Lagers ganz wesentlich von der Qualifikation des Bedieners und dessen Kenntnissen vom Lager ab. Ein Ersatz oder eine Vertretung ist kaum möglich. Auch kommt es bei dieser Bewirtschaftungsart selbst für einen erfahrenen Fahrzeugbediener, der sich im Lager auskennt, immer wieder zu Suchfahrten und Fehltransporten, wodurch sich die Zugriffszeiten auf die Waren verlängern. Hinzu kommt, daß bei einer "chaotischen" Bewirtschaftung eines Lagers häufig nicht der tatsächliche Inventarbestand im Lager bekannt ist, wodurch zwangsläufig Suchfahrten unvermeidlich sind.

Der Erfindung liegt die Aufgabe zugrunde, ein Verfahren zur Bewirtschaftung von Lagern bereitzustellen, das den Aufwand einer zentralen Lagerverwaltung vermeidet. Ebenfalls liegt der Erfindung die Aufgabe zugrunde, ein Flurförderzeug zur Bewirtschaftung eines Lagers ohne zentrales Lagerverwaltungssystem bereitzustellen.

Erfindungsgemäß wird die Aufgabe durch ein Flurförderzeug mit den Merkmalen aus Anspruch 1 sowie ein Verfahren mit den Merkmalen aus Anspruch 7 gelöst.

Das erfindungsgemäße Flurförderzeug ist mit einem Bordcomputer ausgestattet, der eine für eine Bedienperson zugängliche Anzeigeeinheit und ein Eingabegerät aufweist. Der Bordcomputer unterscheidet sich von aus dem Stand der Technik bereits bekannten Datenterminals dadurch, daß er lokal die Möglichkeit besitzt, Daten zu verarbeiten. Der Bordcomputer ist mit einer Lagerverwaltung ausgestattet. Die Lagerverwaltung besteht beispielsweise aus einer Software, die zusätzlich auf den Bordcomputer aufgespielt wird. Alternativ kann die Lagerverwaltung auch als ein eigenständiges Gerät ausgebildet sein, das mit dem Bordcomputer Daten austauscht. Die Lagerverwaltung speichert Belegungsdaten zu dem Lager mit Art und Position der Waren. Die Belegungsdaten sind beispielsweise verknüpft mit Art der Ware, Menge/Anzahl der eingelagerten Artikel, Einlagerdatum und/oder Chargennummer der Artikel. Informationen zu den Belegungsdaten werden über die Anzeigeeinheit am Flurförderzeug dargestellt. Die Erfindung beruht auf der Erkenntnis, daß nicht unbedingt ein zentrales Lagerverwaltungssystem erforderlich ist. Insbesondere in kleineren und mittleren Lagern, in denen nur einige Flurförderzeuge im Einsatz sind, wurde erkannt, daß eine in das Flurförderzeug integrierte Lagerverwaltung möglich ist. Der Vorteil besteht darin, daß beliebige Bediener auch ohne genaue Lagerkenntnisse im Lagerbereich arbeiten können. Unnötige Leerfahrten sowie Suchfahrten können bei dem erfindungsgemäßen Flurförderzeug deutlich eingeschränkt werden.

In einer bevorzugten Ausgestaltung besitzt das Flurförderzeug eine Sende- und Empfangseinheit, die an einem Fahrzeugkörper oder einem Lasttragmittel vorgesehen und auf das Lasttragmittel sowie einen Bereich vor diesem ausgerichtet ist. Die Sende- und Empfangseinheit empfängt Daten von RFID-Transpondern an dem zu transportierenden Gut und bevorzugt auch von den Lagerplätzen. Über die Sende- und Empfangseinheit kann jeweils das gerade zu transportierende Gut durch den Bordcomputer identifiziert werden. Dies ermöglicht es, auch direkt beim Transport die Waren zu erfassen. Der Einsatz von RFID-Transpondern bietet hier eine Reihe von Vorteilen. Grundsätzlich ist es zwar auch möglich, andere berührungslose Systeme zum Erfassen der transportierten Waren vorzusehen, jedoch bietet der Einsatz von RFID-Transpondern besondere Vorteile, da diese auch ausgelesen werden können, wenn keine direkte Sichtverbindung zwischen Transponder und Sende- und Empfangseinheit besteht.

Zweckmäßigerweise leitet der Bordcomputer auch Daten an das Lagerverwaltungsprogramm weiter. So kann beispielsweise ein mit einer Waage ausgestattetes Flurförderzeug das Messen des Gewichts einer Ware an den Bordcomputer weiterleiten, der so beispielsweise eine Plausibilitätsprüfung seiner Belegungsdaten durchführen kann.

Zweckmäßigerweise ist der Bordcomputer mit einer Funkeinrichtung verbunden, die Daten an eine externe Rechnereinheit sendet und von dieser empfangen kann. Die Funkeinrichtung ermöglicht es, mehrere Flurförderzeuge mit einer Lagerverwaltung einzusetzen, die untereinander ihre Belegungsdaten abgleichen. Darüber hinaus ist auch möglich, das Flurförderzeug mit seiner Lagerverwaltung in ein zentrales, übergeordnetes Datenverwaltungssystem einzubinden.

Die erfindungsgemäße Aufgabe wird ebenfalls durch ein Verfahren zur Verwaltung von Gütern in einem Lager gelöst. Die Güter werden in dem Lager durch Flurförderzeuge transportiert, wobei folgende Verfahrensschritte wiederholt durchgeführt werden:

Belegungsdaten zur Art und Position der Waren im Lager werden im Bordcomputer eines Flurförderzeugs gespeichert. Diese Belegungsdaten stellen den Ausgangsbestand dar, von dem ausgehend bei jedem Transport einer Ware mit dem Flurförderzeug die gespeicherten Belegungsdaten aktualisiert werden. Für neu eintreffende Ware und für Waren, die das Lager verlassen, werden die Belegungsdaten in dem Bordcomputer des Flurförderzeugs entsprechend aktualisiert und gespeichert. Ein wichtiger Aspekt des Verfahrens ist, Belegungsdaten zu dem Lager mit dem Flurförderzeug zu erfassen und zu speichern und den Transport der Ware in dem Lager aufzuzeichnen.

Das erfindungsgemäße Verfahren schafft die Möglichkeit, auf eine übergeordnete zentrale Lagerverwaltung zu verzichten und einzig und allein durch den Einsatz der Flurförderzeuge die Belegungsdaten für das Lager zu aktualisieren.

Bevorzugt ist bei dem Einsatz von mehreren Flurförderzeugen ein Austausch der Belegungsdaten untereinander vorgesehen, wobei jedes der Flurförderzeuge Belegungsdaten anhand von empfangenen Belegungsdaten aktualisiert.

Bevorzugt liest das Flurförderzeug über eine Sende- und Empfangseinheit RFID-Transponder an der Ware und/oder den Lagerplätzen und aktualisiert seine entsprechenden Belegungsdaten.

Die Erfindung wird nachfolgend anhand einer Zeichnung näher beschrieben.

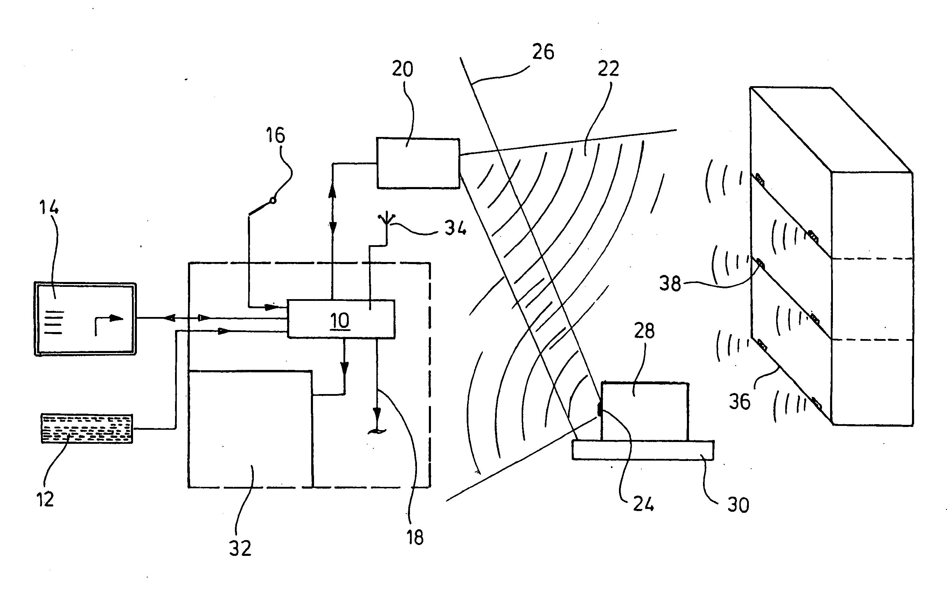

Die einzige Figur zeigt in einer schematischen Ansicht einen Bordcomputer 10. Der Bordcomputer nimmt in an sich bekannter Art und Weise die Eingabe beispielsweise über eine Tastatur 12 entgegen und stellt so seine Ergebnisse auf einem Monitor 14 dar. Der Monitor 14 kann beispielsweise in die Konsole im Flurförderzeug integriert sein. Auch ist es möglich, Eingabeeinheit 12 und Anzeigeeinheit 14 zusammenzufassen, beispielsweise durch einen Touch Screen. Der Bordcomputer 10 ist zusätzlich mit einem Hebel 16 verbunden, über den Steuerbefehle an den Bordcomputer gelangen. Grundsätzlich ist die primäre Aufgabe des Bordcomputers nicht, die Fahrzeugsteuerung zu übernehmen. Es ist aber auch möglich, den Bordcomputer bei einer Reihe von Steuerfunktionen 18 im Fahrzeug einzusetzen, wobei der Bordcomputer entsprechende Signale für Aktuatoren in dem Fahrzeug generiert.

Bei dem vorliegenden Fahrzeug ist der Bordcomputer 10 mit einer Sende- und Empfangseinheit 20 verbunden. Die Sende- und Empfangseinheit ist ausgelegt, um mit RFID-Transpondern zusammenzuwirken. Hierzu sendet die Sende- und Empfangseinheit ein Signal 22 aus, das von einem RFID-Transponder empfangen wird. Ein Transponder 24 sendet hierauf ansprechend ein Signal 26 aus. Das Signal 26 wiederum wird von der Einheit 20 empfangen. Die Transponder können als aktive oder als passive Transponder ausgebildet sein. Der Transponder an der Ware sendet Daten aus. Die Daten umfassen beispielsweise Kennzeichnungen zur Warenart, Stückzahl sowie weitere interne Referenznummern und dergleichen. Der Transponder 24 kann alternativ oder zusätzlich auch an dem Lastträger 30 angebracht sein, auf dem sich Ware 28 befindet. Zusätzlich können Transponder 38 auch an den Lagerplätzen 36 vorgesehen sein. Lagerplatz 36 ist schematisch als Regal dargestellt, kann aber auch jeder andere Lagerplatz sein.

Die von den Schreiblesegerät 20 empfangenen Daten werden am Bordcomputer 10 ausgewertet und an eine Lagerverwaltung 32 weitergeleitet. Die Lagerverwaltung ist in der Figur als eigenständiger Block dargestellt. Grundsätzlich ist es möglich, ein eigenes Gerät, das mit dem Bordcomputer 10 verbunden ist, als Lagerverwaltung einzusetzen. Der dargestellte Block 32 spiegelt hierbei die logische Struktur wieder. Die Lagerverwaltung kann physikalisch als ein Programm in dem Bordcomputer 10 ablaufen. Selbstverständlich ist es auch möglich, ein eigenständiges Gerät zur Lagerverwaltung an den Bordcomputer 10 anzuschließen.

Ebenfalls schematisch dargestellt ist eine Funkeinheit 34, über die der Bordcomputer mit externen Rechnereinheiten kommunizieren kann. Dies ermöglicht beispielsweise, die Lagerverwaltung mit der Lagerverwaltung anderer Flurförderzeuge abzugleichen. Wichtig hierbei ist, daß nicht die Lagerverwaltung in den unterschiedlichen Flurförderzeugen gemeinsam eine Lagerverwaltung ergeben, sondern jedes Flurförderzeug eine vollständige Lagerverwaltung besitzt. So wird sichergestellt, daß an jedem Flurförderzeug sämtliche möglicherweise relevanten Daten zur Verfügung stehen. Der Vorteil besteht darin, daß sich der Fahrzeugbediener nur noch auf den Transport konzentrieren muß, während alle Kontroll- und Überprüfungsfunktionen durch das Lagerverwaltungssystem in dem Flurförderzeug selbsttätig übernommen werden. Insbesondere in kleinen Lagern, in denen lediglich ein oder zwei bis drei Flurförderzeuge die anfallenden Transportaufgaben erledigen, führt die lokale Verwaltung zu einer Reihe von Vorteilen. Zunächst ist es möglich, daß sich eine Bedienperson ohne genaue Lagerkenntnisse im Lager zurechtfindet und Fahraufträge zügig erledigt. Weiterhin ist das Lager gut organisiert und besitzt ein hohes Maß an Übersichtlichkeit. Eine Inventur des Lagers ist direkt möglich. Auch werden unnötige Leer- und Fehlfahrten eingespart, so daß eine erhebliche Kostenersparnis eintreten kann. Hinzu kommt, daß die Lösung einen deutlich geringeren Aufwand darstellt als eine zentrale Lagerverwaltung.

## Patentansprüche

1. Flurförderzeug mit einem Bordcomputer (10), der für eine Bedienperson zugänglich eine Anzeigeeinheit (14) und ein Eingabegerät (12) aufweist, **dadurch gekennzeichnet, daß** der. Bordcomputer mit einer Lagerverwaltung (32) ausgestattet ist, bei der Belegungsdaten zur Art und Position von Waren im Lager gespeichert sind, wobei Informationen zu den Belegungsdaten über die Anzeigeeinheit am Flurförderzeug darstellbar sind.

2. Flurförderzeug nach Anspruch 1, **dadurch gekennzeichnet, daß** eine Sende- und Empfangseinheit (20) an einem Fahrzeugkörper oder einem Lasttragmittel vorgesehen ist und auf das Lasttragmittel sowie einen Bereich vor dem Lasttragmittel ausgerichtet ist.

3. Flurförderzeug nach Anspruch 2, **dadurch gekennzeichnet, daß** die Sende- und Empfangseinheit (20) Daten von RFID-Transpondern (24) an dem zu transportierenden Gut empfängt und an den Bordcomputer weiterleitet.

4. Flurförderzeug nach Anspruch 3, **dadurch gekennzeichnet, daß** die Sende- und Empfangseinheit (20) Daten von RFID-Transpondern, die an Ablagestationen und Plätzen montiert sind, an den Bordcomputer weiterleiten.

5. Flurförderzeug nach Anspruch 3 oder 4, **dadurch gekennzeichnet, daß** der Bordcomputer Daten an das Lagerverwaltungssystem weiterleitet.

6. Flurförderzeug nach einem der Ansprüche 1 bis 5, **dadurch gekennzeichnet, daß** zusätzlich der Bordcomputer mit einer Funkeinrichtung (34) verbunden ist, die Daten zur Lagerverwaltung an externe Rechnereinheiten sendet und von diesen empfangen kann.

7. Verfahren zur Verwaltung von Gütern in einem Lager, in dem die Güter durch Flurförderzeuge transportiert werden, bei dem folgende Schritte ablaufen:
- Belegungsdaten zur Art und Position der Waren im Lager werden in einem Bordcomputer eines Flurförderzeugs gespeichert und
- die Belegungsdaten werden bei jedem Transport einer Ware mit dem Flurförderzeug aktualisiert.

8. Verfahren nach Anspruch 7, **dadurch gekennzeichnet, daß**
- mehrere Flurförderzeuge die Belegungsdaten untereinander austauschen,
- wobei jedes der Flurförderzeuge seine Belegungsdaten anhand empfangener Belegungsdaten aktualisiert.

9. Verfahren nach Anspruch 7 oder 8, **dadurch gekennzeichnet, daß** das Flurförderzeug über eine Sende- und Empfangseinheit Informationen von RFID-Transpondern an der Ware liest und die vorhandenen Belegungsdaten aktualisiert.

## Claims

1. An industrial truck with an on-board computer (10), which has a display unit (14) and an input device (12) accessible for an operator, **characterized in that** the on-board computer is equipped with a warehouse management (32) in which are stored the location data about the type and location of products in the stock, wherein information about the location data can be displayed using the display unit on the industrial truck.

2. The industrial truck according to claim 1, **characterized in that** a transmitting and receiving unit (20) is provided on a vehicle component or on a load-bearing means, an is aligned on the load-bearing means and at an area in front of the load-bearing means.

3. The industrial truck according to claim 2, **characterized in that** the transmitting and receiving unit (20) receives data from RFID transponders (24) on the goods to be transported, and transmits it to the on-board computer.

4. The industrial truck according to claim 3, **characterized in that** the transmitting and receiving unit (20) transfers data from RFID transponders that are mounted at storage stations and places, to the on-board computer.

5. The industrial truck according to claim 3 or 4, **characterized in that** the on-board computer transmits data to the warehouse management system.

6. The industrial truck according to one of the claims 1 to 5, **characterized in**
**the** on-board computer is additionally connected to a radio device (34) that can send data about the warehouse management to external computing units and receive data from them.

7. A method for administration of goods in a warehouse, in which the goods are transported by industrial trucks, in which the following steps occur:
- location data about the type and location of the goods in stock are stored in an on-board computer of an industrial truck, and
- the location data are updated with every transport of a good to the industrial truck.

8. The method according to claim 7, **characterized in that**
- multiple industrial trucks exchange the location data amongst each other,
- wherein the location data of each of the industrial trucks is updated using received location data.

9. The method according to claim 7 or 8, **characterized in that** the industrial truck reads information from RFID transponders using a transmitter and receiver unit, and updates the existing location data.

## Revendications

1. Chariot de manutention muni d'un ordinateur de bord (10) qui comporte une unité d'affichage (14) et un périphérique d'introduction de données (12) accessibles à un opérateur, **caractérisé en ce que** l'ordinateur de bord est équipé d'une gestion de stockage (32) dans laquelle sont mémorisées des données d'occupation relatives au type et à la position des marchandises dans l'entrepôt, des informations sur les données d'occupation pouvant être représentées sur l'unité d'affichage du chariot de manutention.

2. Chariot de manutention selon la revendication 1, **caractérisé en ce qu'**une unité d'émission et de réception (20) est prévue sur un corps de véhicule ou un engin porte-charge et est dirigée sur l'engin porte-charge ainsi que sur une zone précédant l'engin porte-charge.

3. Chariot de manutention selon la revendication 2, **caractérisé en ce que** l'unité d'émission et de réception (20) reçoit des données de transpondeurs RFID (24) sur la marchandise à transporter et les transmet à l'ordinateur de bord.

4. Chariot de manutention selon la revendication 3, **caractérisé en ce que** l'unité d'émission et de réception (20) transmet des données de transpondeurs RFID qui sont montés sur les stations de réception et les postes à l'ordinateur de bord.

5. Chariot de manutention selon les revendications 3 ou 4, **caractérisé en ce que** l'ordinateur de bord transmet des données au système de gestion de stockage.

6. Chariot de manutention selon une des revendications 1 à 5, **caractérisé en ce que** l'ordinateur de bord est relié en plus à un équipement radio (34) qui émet des données relatives à la gestion de stockage vers des unités de calcul externes et peut en recevoir de celles-ci.

7. Procédé de gestion des marchandises dans un entrepôt, dans lequel les marchandises sont transportées par des chariots de manutention, dans lequel ont lieu les étapes suivantes :
- les données d'occupation sur le type et la position des marchandises dans l'entrepôt sont mémorisées dans un ordinateur de bord d'un chariot de manutention et
- les données d'occupation sont actualisées à chaque transport d'une marchandise avec le chariot de manutention.

8. Procédé selon la revendication 7, **caractérisé en ce que**
- plusieurs chariots de manutention échangent entre eux les données d'occupation,
- chacun des chariots de manutention actualise ses données d'occupation au moyen des données d'occupation reçues.

9. Procédé selon les revendications 7 ou 8, **caractérisé en ce que** le chariot de manutention lit via une unité d'émission et de réception des informations de transpondeurs RFID sur la marchandise et actualise les données d'occupation existantes.
